# EUROPÄISCHE PATENTANMELDUNG

(11) **EP 1 431 675 A2**
(43) Veröffentlichungstag der Anmeldung: **23.06.2004**
(21) Anmeldenummer: 03026789.2
(22) Anmeldetag: 22.11.2003
(51) Int. Cl.: F24F 5/00, F24D 3/16

(54) **Anordnung zur Raumklimatisierung**

(30) Priorität: 13.12.2002 CH 21292002
(71) Anmelder: Schneider Dämmtechnik AG, 8405 Winterthur (CH)
(72) Erfinder: Meyer, Urs, 8536 Hüttwilen (CH)
(74) Vertreter: Troesch Scheidegger Werner AG

(57) **Zusammenfassung**

Eine Vorrichtung zur Raumkühlung bzw. -heizung weist ein Leitungssystem (23) auf sowie an einer Decken- oder Raumwandung (1, 2) angeordnete flächige Wand- oder Deckenpaneele (21), welche eine gute thermische Übertragung von der Wandung (1) an einen Raum gewährleisten. Zwischen dem Leitungssystem (23) und der Raumwandung (1) und/oder den Wand- oder Deckenpaneelen (21) ist ein gut wärmeleitender Verbund vorgesehen sowie weist die Vorrichtung mindestens ein Mittel (5) auf zum Erzeugen einer Luftströmung entlang der Wand- oder Deckenpaneele (21).

## Beschreibung

Die vorliegende Erfindung betrifft eine Anordnung zur Raumklimatisierung bzw. Raumkühlung oder -heizung gemäss dem Oberbegriff nach Anspruch 1 sowie ein Verfahren zur Klimatisierung von Räumlichkeiten.

Insbesondere bei Bürobauten und neuerdings auch bei Mehrfamilienhäusern wird versucht, bei steigenden Komfortansprüchen gleichzeitig den Energieverbrauch zu senken, durch Verwendung von immer mehr künstlicher Intelligenz und durch Integration komplexer Technik im Gebäude selbst. Klimatisierung der Räume und Schalldämmung spielen dabei eine wichtige Rolle, speziell bei Grossraumbüros, Schulungsräumen, Kantinen und dgl.

Aus der EP 1 167 888 ist ein Raumklimatisierungssystem bekannt, welches den Verzicht oder zumindest die reduzierte Benutzung von Energie intensiven Klimaanlagen ermöglicht und zudem geeignet ist, bei sogenannten autoregulativen Gebäuden nachgerüstet zu werden, insbesondere dann, wenn die beispielsweise in Betonböden und Decken eingegossenen Leitungssysteme den Anforderungen an Klimatisierung und/oder Schalldämmung nicht gerecht werden.

Aufgabe der vorliegenden Erfindung ist es, eine Leistungssteigerung des aus der europäischen Patentanmeldung 1 167 888 bekannten Klimatisierungssystems zu ermöglichen.

Erfindungsgemäss wird die gestellte Aufgabe mittels einer Anordnung gemäss dem Wortlaut nach Anspruch 1 gelöst.

Vorgeschlagen wird, dass zusätzlich zum aus der EP 1 167 888 bekannten Anordnung Mittel zum Erzeugen eines Luftstromes entlang von Wand- oder Deckenpaneelen vorgesehen sind, welche Wand- oder Deckenpaneelen geeignet sind, einerseits einem Raum Wärme zuzuführen oder zu entziehen und andererseits gegebenenfalls eine schalldämmende Wirkung zu entfalten.

Zur Erzeugung des Luftstromes wird gemäss einer bevorzugten Ausführungsvariante das Anordnen mindestens eines zusätzlichen Decken- oder Wandelementes vorgeschlagen, welches mindestens ein, in einem Gehäuse angeordnetes, Umluftelement bzw. einen Ventilator aufweist, sowie mindestens einen Wärmetauscher bzw. ein Kühl- oder Heizaggregat, wobei das Gehäuse mindestens eine oder mehrere Öffnungen zum Ansaugen von Luft aufweist, sowie zum Ausstossen bzw. Ausblasen der gekühlten oder erwärmten Luft, und wobei die Öffnungen zum Ausstossen oder Ausblasen derart in mindestens einer Seitenwandung des Gehäuses angeordnet sind, und/oder Umlenkmittel zum Umlenken des Luftstromes vorgesehen sind, dass der Ausstoss bzw. das Ausblasen eine wenigstens nahezu parallel zur Decke bzw. Wandung verlaufende Strömung erzeugt.

Gemäss wiederum einer weiteren bevorzugten Ausführungsvariante weist das Wand- oder Deckenelement, verglichen zu den Wandpaneelen, eine grössere Wandstärke auf, oder ist in Bezug auf die Wandpaneele versetzt, d.h. beabstandet von der Raumwandung angeordnet, damit das Wand- oder Deckenelement seitlich von den Wandpaneelen vorsteht, damit der das Wand- oder Deckenelement beispielsweise seitlich verlassende Luftstrom entlang der Oberfläche der Wandpaneele strömen kann.

Wiederum gemäss einer weiteren bevorzugten Ausführungsvariante ist das Wand- oder Deckenelement bzw. die Wand oder Deckenelemente je zwischen zwei Decken- oder Wandpaneelen angeordnet, und sowohl die Öffnungen für das Ansaugen wie auch die Öffnungen für das Ausstossen sind je seitlich am Gehäuse des Elementes ausgebildet, derart, dass sowohl die durch das Ansaugen erzeugte Strömung wie auch die durch das Ausstossen der klimatisierten Luft erzeugte Strömung je wenigstens nahezu parallel entlang der Oberfläche der Wandpaneele verläuft.

Analog der EP 1 167 888 wird weiter vorgeschlagen, dass es sich bei den flächigen Paneelen um thermisch leitende schalldämmende Wand- oder Deckenpaneele handelt. Weiter wird vorgeschlagen, dass auf der Wandung, wie beispielsweise an der Unterseite einer Decke direkt aufliegend und mit dieser thermisch verbunden, mindestens eine gut thermisch leitende Platte bzw. ein Blech angeordnet ist, mit welcher bzw. welchem mittels mindestens einem thermisch leitenden Befestigungselement das Leitungssystem wie auch die flächigen Paneele thermisch leitend verbunden sind.

Gemäss wiederum einer bevorzugen weiteren Ausführungsvariante wird vorgeschlagen, dass es sich bei den thermisch leitenden Befestigungselementen um Magnete handelt, wodurch sowohl das Leitungssystem wie auch die Paneele und das Wand- oder Deckenelement magnetisch an der Wandung, wie beispielsweise an der Unterseite einer Decke, gehalten werden.

Weiter bevorzugte Ausführungsvarianten der erfindungsgemässen Anordnung sind in den abhängigen Ansprüchen charakterisiert.

Weiter vorgeschlagen wird ein Verfahren zum Klimatisieren von Räumlichkeiten gemäss dem Wortlaut nach 9.

Erfindungsgemäss wird vorgeschlagen, dass bei einer Anordnung zur Raumklimatisierung gemäss der EP 1 167 888 durch die Verwendung geeigneter Mittel eine Luftströmung entlang der flächigen Paneele erzeugt wird, um den Wirkungsgrad des Wärmeaustausches weiter zu erhöhen.

Die Erfindung wird nun beispielsweise und unter Bezug auf die beigefügten Figuren näher erläutert.

Dabei zeigen:
- Fig. 1: ein erfindungsgemässes Wand- oder Deckenelement, geeignet für die Erzeugung eines Luftstromes entlang der Raumklimatisierungsanordnung,
- Fig. 2: eine weitere Ausführungsvariante des erfindungsgemässen Wand- oder Deckenelementes,
- Fig. 3: das Anordnen des Wand- oder Deckenelementes aus Fig. 1, integriert in ein Raumklimatisierungssystem gemäss der EP 1 167 888,
- Fig. 4: das Anordnen eines erfindungsgemässen Wand- oder Deckenelementes im Randbereich einer Decke, integriert in ein Raumklimatisierungssystem gemäss der EP 1 167 888,
- Fig. 5: ein Wand- oder Deckenelement gemäss Fig. 2, integriert in ein Raumklimatisierungssystem gemäss der EP 1 167 888, und
- Fig. 6: schematisch in Perspektive die Unterseite eines erfindungsgemässen Raumklimatisierungssystems, enthaltend ein Wand- oder Deckenelement zur Erzeugung des Luftstromes.

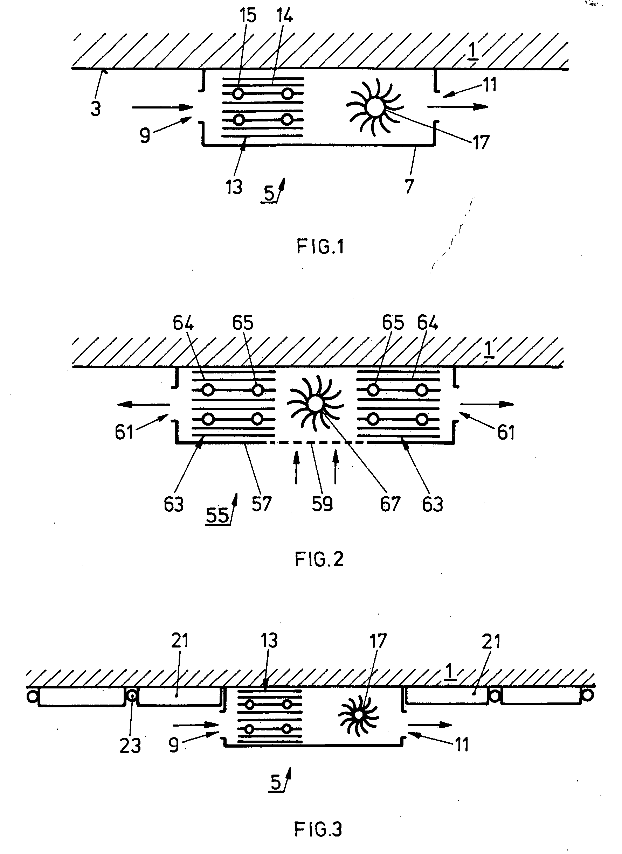

In Figur 1 ist schematisch im Schnitt ein erfindungsgemässes Wand- oder Deckenelement 5 dargestellt, welches an der Unterseite 3 einer Decke 1 angeordnet ist. In einem Gehäuse 7 angeordnet ist ein Umluftelement bzw. ein Ventilator 17, mittels welchem ein Luftstrom in Pfeilrichtung erzeugt werden kann. Durch eine Öffnung 9 im Gehäuse 7 wird Luft wiederum in Pfeilrichtung in das Gehäuse angesogen, welche Luft durch einen Wärmetauscher bzw. ein Register 13 strömt. Das Register besteht aus Rohrleitungen 15 sowie flächigen Wandblechen 14, entlang welcher die Luft strömt. Je nach dem, ob die Luft zu beheizen oder zu kühlen ist, strömt durch die Leitungen 15 ein Kühl- oder ein Heizmedium. Über eine weitere Öffnung 11 wird die Luft mittels des Ventilators 17 wieder ausgestossen, um entweder gekühlt oder erhitzt an die Umgebung bzw. das Rauminnere abgegeben zu werden.

In Figur 2 ist eine weitere Ausführungsvariante eines Wand- oder Deckenelementes 55 dargestellt, wobei im Gegensatz zur Ausführung in Figur 1, das Gehäuse 57 in Figur 2 Öffnungen 59 in der Frontseite aufweist zum Ansaugen von Raumluft. Wiederum wird mittels eines Umluftelementes oder Ventilators 67 die Luft angesogen und in Pfeilrichtung durch die beiden Öffnungen 61 ausgestossen. Dabei wird vor dem Ausstossen die Luft erneut je durch einen Wärmetauscher oder ein Register 63 getrieben, welche Wärmetauscher oder Register durch Rohrleitungen 65 und Leitbleche 64 gebildet werden.

Bei den beiden in den Figuren 1 und 2 dargestellten Ausführungsvarianten handelt es sich selbstverständlich nur um Beispiele, welche auf x-beliebige Art und Weise abgeändert oder modifiziert werden können.

Figur 3 zeigt nun das Wand- bzw. Deckenelement 5, angeordnet in einem Raumklimatisierungssystem, wie bekannt aus der EP 1 167 888. Dabei wird auf eine detaillierte Beschreibung des Raumklimatisierungssystems verzichtet, da dieses ja ausführlich in der EP 1 167 888 beschrieben ist. Wesentlich ist, dass durch das Anordnen des Wand- oder Deckenelementes 5 zwischen zwei Deckenpaneelen 21 ein Luftstrom erzeugt wird, welcher im Wesentlichen parallel zur Decke 1 bzw. zur Frontseite der Wand- oder Deckenpaneele 21 verläuft. Damit dies möglich ist, ist es wichtig, dass die Öffnungen 9 und 11 seitlich offen sind, was dadurch möglich wird, dass die Wandstärke des Wand- oder Deckenelementes 5 grösser ist als diejenige der Deckenpaneele 21. Schliesslich ebenfalls in Figur 3 dargestellt sind die Leitungen 23, welche je zwischen zwei Decken- oder Wandpaneelen 21 verlaufend angeordnet sind.

Durch das Betreiben des Ventilators 7 wird nun, wie mit Pfeilen dargestellt, eine Luftströmung entlang der Deckenpaneele 21 erzeugt, wobei einerseits Luft durch die Öffnung 9 angesogen und andererseits durch die Öffnung 11 ausgestossen wird. Durch den, im Wand- oder Deckenelement angeordneten Wärmetauscher 13 wird eine weitere Klimatisierung der Luft ermöglicht, was entweder heisst heizen oder kühlen der Raumluft.

Der grosse Vorteil des Anordnens des erfindungsgemäss vorgeschlagenen Wand- oder Deckenelementes liegt darin, dass einerseits eine Wirkungsgrad-Verbesserung des Wärmeaustausches an der Unterseite der Deckenpaneele 21 ermöglicht wird, und andererseits durch die wesentlich höhere Austauschereffizienz im Decken- oder Wandelementes 5 die Klimatisierung verstärkt wird. Dabei ist es vorteilhaft, dass dabei nicht eine Luftströmung in den Raum hinein erzeugt wird, sondern eine Luftströmung parallel zur Raumwandung bzw., wie in Figur 3 dargestellt, parallel zur Decke. Bekannte Raumklimatisierungssysteme haben jeweils den Nachteil, dass die klimatisierte Luft in den Raum hinein strömt, was oft als sehr unangenehm empfunden wird. Dies vor allem bei Kühlung der Luft im Sommer.

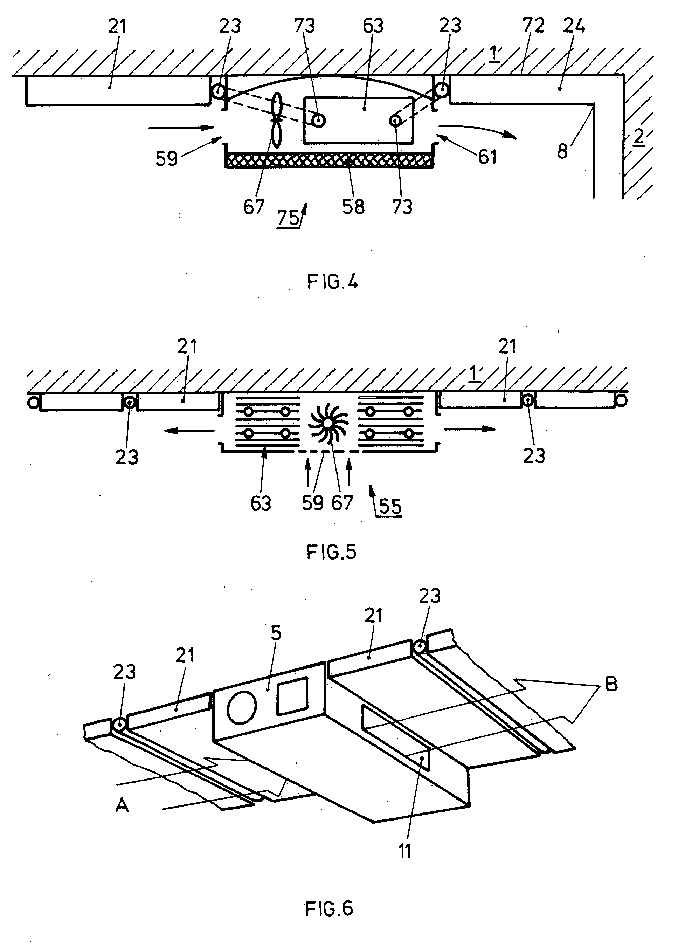

In Figur 4 ist eine weitere Ausführungsvariante eines erfindungsgemässen Wand- oder Deckenelementes 75 dargestellt, angeordnet im Rand- bzw. Eckbereich einer Decke 1. Beim Wand- oder Deckenelement 75, gemäss Figur 4, ist einerseits deutlich erkennbar, dass die Rohrleitungen des Wärmetauschers 63 mit dem Leitungssystem 23 des Raumklimatisierungssystems verbunden sind, und andererseits ist frontseitig, d.h. gerichtet zum Rauminnern entlang der Gehäusefrontfläche eine thermisch leitende, und schallabsorbierende Schicht 58 angeordnet. Zusätzlich'soll Figur 4 zeigen, dass durch Anordnen eines Wand- oder Deckenelementes 75 im Randbereich einer Decke 1, d.h. nahe einer Raumseitenwandung 2 der das Element durch die Öffnung 61 verlassende Luftstrom an der Deckenecke 8 umgelenkt und entlang der Raumseitenwandung nach unten geführt wird. Dies ergibt einen weiteren, möglicherweise erwünschten Klimatisierungseffekt.

Figur 5 wiederum zeigt das erfindungsgemäss dargestellte Wand- oder Deckenelement aus Figur 2, ebenfalls integriert angeordnet in einem Raumklimatisierungssystem, wie bekannt aus der EP 1 167 888. Im Gegensatz zum Element gemäss Figur 1 wird hier Raumluft von unten angesaugt und je seitlich ausgestossen, um entlang der Deckenpaneele 21 zu strömen.

In Figur 6 schliesslich soll schematisch in Perspektive die Unterseite einer Decke gezeigt werden, an welcher ein Raumklimatisierungssystem angeordnet ist, wie im Schnitt dargestellt in Figur 1. Mittels des mittig angeordneten Deckenelementes 5 wird ein Luftstrom erzeugt, wie mit den beiden Pfeilen A und B schematisch dargestellt. Dieser Luftstrom verläuft parallel an der Unterseite der Deckenpaneele 21, um einerseits den Wirkungsgrad des Wärmeaustausches an den Deckenpaneelen zu erhöhen und andererseits um im Deckenelement 5 zusätzlich klimatisiert zu werden.

Bei den in den Figuren 1 bis 6 dargestellten Beispielen handelt es sich selbstverständlich nur um mögliche Ausführungsvarianten, welche geeignet sind, die vorliegende Erfindung näher zu erläutern. Selbstverständlich ist es möglich, die Anordnungen bzw. Wand- oder Deckenelemente auf x-beliebige Art und Weise abzuändern oder durch weitere Merkmale zu ergänzen. So ist es selbstverständlich auch möglich, bei einem Raumklimatisierungssystem gemäss der EP 1 167 888, welches ganzflächig, beispielsweise an der Unterseite einer Decke angeordnet ist, ein erfindungsgemäss vorgeschlagenes Wand- oder Deckenelement zusätzlich auf ein Deckenpaneel aufzubringen, und nicht zwischen zwei Deckenpaneele anzuordnen. Dies ist insbesondere beim Nachrüsten eine mögliche Variante, falls nicht ein Deckenpaneel entfernt werden soll.

Grundsätzlich erfindungswesentlich ist, dass entlang einem Raumklimatisierungssystem, wie insbesondere beschrieben in der EP 1 167 888 eine Luftströmung erzeugt wird.

## Patentansprüche

1. Vorrichtung zur Raumkühlung bzw. -heizung, **gekennzeichnet durch**
- ein Leitungssystem (23) und
- an einer Decken- oder Raumwandung (1, 2) angeordnete flächige Wand- oder Deckenpaneele (21, 24), welche eine gute thermische Übertragung von der Wandung (1, 2) an einen Raum gewährleisten,
- ein gut wärmeleitender Verbund zwischen Leitungssystem (23) und der Raumwandung (1, 2) und/oder den Wand- oder Deckenpaneelen (21, 24) sowie
- mindestens ein Mittel (5, 55, 75) zum Erzeugen einer Luftströmung entlang der Wand- oder Deckenpaneele (21, 24).

2. Vorrichtung nach Anspruch 1, **dadurch gekennzeichnet, dass** das Mittel zum Erzeugen einer Luftströmung mindestens ein Decken- oder Wandelement (5, 55, 75) umfasst, aufweisend mindestens ein in einem Gehäuse (7, 57) angeordnetes Umluftelement (17, 67) bzw. einen Ventilator sowie mindestens einen Wärmetauscher bzw. ein Kühl- oder Heizaggregat (13, 63), wobei am Gehäuse mindestens eine oder mehrere Öffnungen zum Ansaugen (9, 59) und Ausblasen (11, 61) derart in einer Seitenwandung des Gehäuses angeordnet sind, und/oder Mittel zum Umlenken des Luftstromes vorgesehen sind, dass der Ausstoss bzw. das Ausblasen wenigstens nahezu parallel zur Decke (1) bzw. der Wand (2) erfolgt.

3. Vorrichtung nach einem der Ansprüche 1 oder 2, **dadurch gekennzeichnet, dass** die Mittel bzw. das Wand- oder Deckenelement (5, 55, 75) eine grössere Wandstärke aufweist, oder gegenüber der Wand- oder Deckenpaneele (21, 24) in Bezug auf die Wandung (1, 2) beabstandet angeordnet ist, so dass das Wand- oder Deckenelement (5, 55, 75) seitlich in Bezug auf die Wand- oder Deckenpaneele vorsteht, damit der seitlich das Gehäuse (7, 67) verlassende Luftstrom an der Oberfläche der Paneele entlang strömen kann.

4. Vorrichtung nach einem der Ansprüche 2 oder 3, **dadurch gekennzeichnet, dass** sowohl Ansaug- wie auch Ausstossöffnungen (9, 11, 59, 61) am Gehäuse seitlich in Richtung zu den Wand- oder Deckenpaneelen hin angeordnet sind.

5. Vorrichtung nach einem der Ansprüche 2 bis 4, **dadurch gekennzeichnet, dass** der Wärmetauscher (13, 63) durch ein Kühl- oder Heizregister gebildet wird, wobei die im Register geführten Flüssigkeitsleitungen (15, 65) mit dem Leitungssystem (23) verbunden sind.

6. Vorrichtung nach einem der Ansprüche 1 bis 5, **dadurch gekennzeichnet, dass** es sich bei den flächigen Paneelen (21, 24) um thermisch leitende, schalldämmende Wand- oder Deckenplatten handelt.

7. Vorrichtung nach einem der Ansprüche 1 bis 6, **dadurch gekennzeichnet, dass** auf der Wandung, wie beispielsweise an der Unterseite (3) einer Decke (1) direkt aufliegend und mit dieser thermisch verbunden, mindestens eine gut thermisch leitende Platte bzw. ein Blech angeordnet ist, mit welcher bzw. welchem das Leitungssystem (23), wie auch die Wand- oder Deckenpaneele (21, 24) und gegebenenfalls das Wand- oder Deckenelement (5, 55, 75) thermisch leitend verbunden sind.

8. Vorrichtung nach einem der Ansprüche 1 bis 7, **dadurch gekennzeichnet, dass** die Wand- oder Deckenpaneele (21, 24) und/oder das Wand- oder Deckenelement (5, 55, 75) magnetisch an der Decke oder Raumwandung (1 ,2) gehalten werden, wie insbesondere auf einer an der Wandung oder der Decke angeordneten, thermisch leitenden metallenen Platte oder einem Blech (72).

9. Verfahren zum Klimatisieren von Räumlichkeiten, **dadurch gekennzeichnet, dass** an oder auf einer Raumwandung mittels eines Leitungssystems ein Kühl- bzw. Heizmedium geführt wird, und über eine thermische Kopplung an der Wandung Wärme abgegeben bzw. von dieser aufgenommen wird, dass zwischen den einzelnen Leitungen des Systems über thermisch leitende Wandpaneele, welche mit der Wandung und/oder dem Leitungssystem thermisch leitend verbunden sind, Wärme von der Wandung und den Leitungen an den Raum zum Heizen abgegeben bzw. vom Raum aufgenommen und an die Wandung und die Leitung zum Kühlen des Raumes übertragen wird, und dass entlang der dem Raum zugewandten Oberfläche der thermisch leitenden Wandpaneele ein Luftstrom erzeugt wird, um den Wirkungsgrad der Wärmeübertragung an der frontseitigen Oberfläche der Wandpaneele zu erhöhen.

10. Verfahren nach Anspruch 9, **dadurch gekennzeichnet, dass** die Strömung mittels eines zusätzlichen Wand- oder Deckenelementes erzeugt wird, welches zwischen den Wandpaneelen angeordnet wird, wobei die Strömung durch mindestens ein Umluftelement bzw. einen Ventilator im Element erzeugt wird, und dass im Element der Luftstrom zusätzlich gekühlt bzw. erwärmt wird, und die so gekühlte bzw. erwärmte Luft seitlich in Richtung an die Wandpaneele ausgestossen wird zur Erzeugung des Luftstromes.
